# EUROPÄISCHE PATENTSCHRIFT

(11) **EP 1 722 913 B1**
(45) Veröffentlichungstag und Bekanntmachung des Hinweises auf die Patenterteilung: **01.10.2008**
(21) Anmeldenummer: 05715831.3
(22) Anmeldetag: 08.03.2005
(51) Int. Cl.: B23C 5/10

(54) **BOHR- UND FRÄSWERKZEUG ZUR ROTIERENDEN SPANABHEBENDEN BEARBEITUNG VON WERKSTOFFEN**
DRILLING AND MILLING TOOL FOR MACHINING MATERIALS IN A ROTATING MANNER
OUTIL DE PERÇAGE ET DE FRAISAGE POUR USINER DES MATERIAUX DE MANIERE ROTATIVE PAR ENLEVEMENT DE COPEAUX

(30) Priorität: 09.03.2004 DE 102004011297
(43) Veröffentlichungstag der Anmeldung: 22.11.2006
(73) Patentinhaber: Nubius Group Präzisionswerkzeuge GmbH, 73037 Göppingen (DE)
(72) Erfinder: FREY, Oskar, 73107 Eschenbach (DE)
(74) Vertreter: Bulling, Alexander
(86) Internationale Anmeldenummer: PCT/EP2005/002434
(87) Internationale Veröffentlichungsnummer: WO 2005/087419

(56) Entgegenhaltungen:
- EP-A- 0 089 545
- EP-A- 1 129 806
- WO-A-02/28604
- DE-A1- 3 005 660
- DE-A1- 3 314 049
- US-A- 2 645 003
- US-A- 5 678 960
- US-A- 5 944 456
- PATENT ABSTRACTS OF JAPAN Bd. 1998, Nr. 11, 30. September 1998 (1998-09-30) & JP 10 151513 A (HITACHI TOOL ENG CO LTD), 9. Juni 1998 (1998-06-09)

## Beschreibung

Die, Erfindung betrifft ein Werkzeug gemäß dem Oberbegriff des Anspruchs 1, zur rotierenden spanabhebenden Bearbeitung von Werkstoffen.

Derartige Werkzeuge sind aus dem Stand der Technik als Bohrer oder Fräser, insbesondere Walzenstirnfräser, bekannt. Es ist eine Vielzahl von Anstrengungen unternommen worden, um diese Werkzeuge hinsichtlich ihrer Stabilität, guter Herstellbarkeit, Gewicht sowie weiterer Kriterien zu optimieren.

Besonders wichtig für ein zuverlässiges Funktionieren der Werkzeuge ist es, das mit einem Werkstoff in Eingriff stehende Werkzeug ausreichend zu kühlen und zu schmieren. Genauso wichtig ist es, dass die während des Bearbeitungsvorgangs entstehenden Späne zuverlässig von der Bearbeitungsstelle abtransportiert werden können. Hierbei muss vermieden werden, dass sich die Späne am Werkzeug festsetzen können, was im schlimmsten Fall zu einer Zerstörung des Werkzeugs und/oder des zu bearbeitenden Werkstücks führen kann.

Aus der EP 0 089 545 ist ein eingangs genanntes Werkzeug bekannt, wobei der durch die Oberfläche der Spankammer und die Hüllfläche begrenzte Querschnitt entlang des Verlaufs der Spankammer auf Höhe verschiedener Schneidelemente unterschiedlich groß ist. Jede Spankammer weist zwei Berandungen auf. Eine Berandung folgt einem ungleichförmigen Verlauf. In diesem Bereich sind die der Spankammer zugeordneten Schneidplatten angeordnet. Die andere Berandung ist geradlinig. Mit der in der EP 0 089 545 A vorgeschlagenen Anordnung sollen die im Bereich der Stirnfläche des Werkzeugs stark unterschiedlichen Schnittgeschwindigkeiten Berücksichtigung finden und eine günstige Schnittkraftverteilung erzeugt werden.

Aus der JP 10 151513 A ist ein Werkzeug mit spiralförmig verlaufenden Spankammern bekannt, deren Berandungen Schneidkanten bilden.

Schließlich ist aus der US 5,944,456 ein Fräswerkzeug mit spiralförmig verlaufenden Spankammern bekannt, deren Berandungen ebenfalls spiralförmig ausgebildet sind, wobei entlang einer Berandung einer Spankammer Schneidplatten angeordnet sind.

Hiervon ausgehend liegt der vorliegenden Erfindung die Aufgabe zugrunde, ein Werkzeug bereitzustellen, mit dem ein optimaler Spanabtransport gewährleistet ist.
Diese Aufgabe wird erfindungsgemäß dadurch gelöst, dass die die Spankammern begrenzenden Berandungen konisch aufeinander zulaufen. Hierbei ergibt sich bei Draufsicht auf eine solche Spankammer ein Kanal mit entlang des Verlaufs abnehmender Breite.

Durch die erfindungsgemäße Maßnahme kann der Spanabfluss durch in ihrer Größe unterschiedliche Spankammerquerschnitte optimiert werden. So kann ein Querschnitt durch eine Spankammer in einer ersten Ebene auf Höhe eines ersten Schneidelements eine kleinere Fläche einnehmen als der Querschnitt durch dieselbe Spankammer in einer zur ersten Ebene parallelen zweiten Ebene auf Höhe eines zweiten Schneidelements. Dabei sind die Querschnitte zur Rotationsachse des Werkzeugs hin durch die Oberfläche der Spankammer und auf der von der Rotationsachse des Werkzeugs abgewandten Seite durch die Hüllfläche des Werkzeugs begrenzt. Die Hüllfläche ist eine Referenzfläche, die durch Rotation des Werkzeugs entsteht. Anders ausgedrückt wird durch die Hüllfläche ein rotationssymmetrischer Raum gebildet, in dem das Werkzeug mit einer Null-Toleranz aufnehmbar ist.

Nach einer Ausführungsform der Erfindung ist der Querschnitt der Spankammer auf Höhe eines stirnseitenfernen Schneidelements größer als auf Höhe eines stirnseitennahen Schneidelements. Hierdurch können während der Bearbeitung eines Werkstoffs erzeugte Späne von der Stirnseite des Werkzeugs weggerichtet abtransportiert werden, wobei durch die zunehmend größer werdende Spankammer beziehungsweise durch den zunehmend größeren Querschnitt der Spankammer wirksam verhindert wird, dass sich die Späne in der Spankammer festsetzen können.

Der Querschnitt der Spankammer kann auch auf Höhe eines stirnseitennahen Schneidelements größer sein als auf Höhe eines stirnseitenfernen Schneidelements. Hierdurch können während der Bearbeitung eines Werkstoffs erzeugte Späne in Richtung auf die Stirnseite des Werkzeugs abtransportiert werden, wobei durch die zunehmend größer werdende Spankammer beziehungsweise durch den zunehmend größeren Querschnitt der Spankammer wirksam verhindert wird, dass sich die Späne in der Spankammer festsetzen können.

Die bei Rotation des Werkzeugs entstehende Hüllfläche kann zylindrisch, kegelförmig oder kegelstumpfförmig sein. Dies hängt von der Grundgeometrie des Werkzeugs ab, die zylindrisch, kegelförmig oder kegelstumpfförmig sein kann.

Der Verlauf der Spankammer kann gradlinig oder spiralförmig sein. Dabei kann die Spankammer parallel, schräg oder windschief schräg zur Rotationsachse des Werkzeugs verlaufen. Es ist auch möglich, die genannten Verläufe von Spankammern an einem Werkzeug zu kombinieren, so dass ein Werkzeug beispielsweise eine gradlinige und eine spiralförmige Spankammer aufweist. So kann die erfindungsgemäße Ausbildung der Spankammer an eine Vielzahl von Anwendungsfällen angepasst werden, ohne die Geometrie des Werkzeugs insgesamt verändern zu müssen.

Die Spankammer ist vorteilhafterweise rinnenförmig ausgebildet, wodurch gewährleistet ist, dass innerhalb der Spankammer keine schroffen Geometriewechsel vorhanden sind, wie beispielsweise spitz aufeinander zulaufende Flächenabschnitte. Durch solche schroffen Geometriewechsel können unerwünschte Toträume gebildet werden, in denen sich Späne festsetzen können.

Dabei kann es vorteilhaft sein, dass der Abstand des Rinnengrunds zur Hüllfläche variabel ist. Hierdurch können bei gleichbleibender Breite entlang des Verlaufs der Spankammer unterschiedlich große Querschnitte gebildet werden.

Nach einer besonders vorteilhaften Ausführungsform ist vorgesehen, dass in der Spankammer, jeweils einem Schneidelement oder einer Gruppe von Schneidelementen zugeordnet, zusätzliche Materialaussparungen vorgesehen sind. Diese Materialaussparungen dienen dazu, die unter Umständen während des Herstellungsvorgangs einer erfindungsgemäßen Spankammer entstehenden Vorsprünge zu eliminieren, so dass auch in Bereichen unmittelbar benachbart zu einem Schneidelement oder einer Gruppe von Schneidelementen vorhandene Späne optimal abtransportiert werden können.

Die Materialaussparungen können durch Teilflächen eines Zylinders, Kegels und/oder Kegelstumpfs begrenzt sein. Somit ist es möglich, die Materialaussparungen durch Bohr- oder Fräsvorgänge herzustellen. Dabei entsteht im Prinzip ein System von aneinander angrenzenden oder ineinander übergehenden Spankammern.

Weitere vorteilhafte Ausgestaltungen und Einzelheiten der Erfindung sind der folgenden Beschreibung zu entnehmen, in der die Erfindung anhand der in der Zeichnung dargestellten Ausführungsbeispiele näher beschrieben und erläutert ist.

Es zeigen:
- Figur 1: ein Werkzeug mit einer gradlinigen Spankammer;
- Figuren 1a und 1b: in Figur 1 angedeutete Schnitte entlang den Bezugslinien A-A beziehungsweise B-B;
- Figur 2: ein erfindungsgemäßes Werkzeug mit einer konischen Spankammer;
- Figuren 2a und 2b: in Figur 2 angedeutete Schnitte entlang den Bezugslinien A-A beziehungsweise B-B;
- Figur 3: ein Werkzeug mit einer spiralförmigen Spankammer;
- Figuren 3a und 3b: in Figur 3 angedeutete Schnitte entlang den Bezugslinien A-A beziehungsweise B-B;
- Figur 4: ein erfindungsgemäßes Werkzeug gemäß einer zweiten Ausführungsform mit einer spiralförmigen, konischen Spankammer;
- Figuren 4a und 4b: in Figur 4 angedeutete Schnitte entlang den Bezugslinien A-A beziehungsweise B-B; und
- Figur 5: ein erfindungsgemäßes Werkzeug gemäß einer dritten Ausführungsform mit einer spiralförmigen, konischen Spankammer.

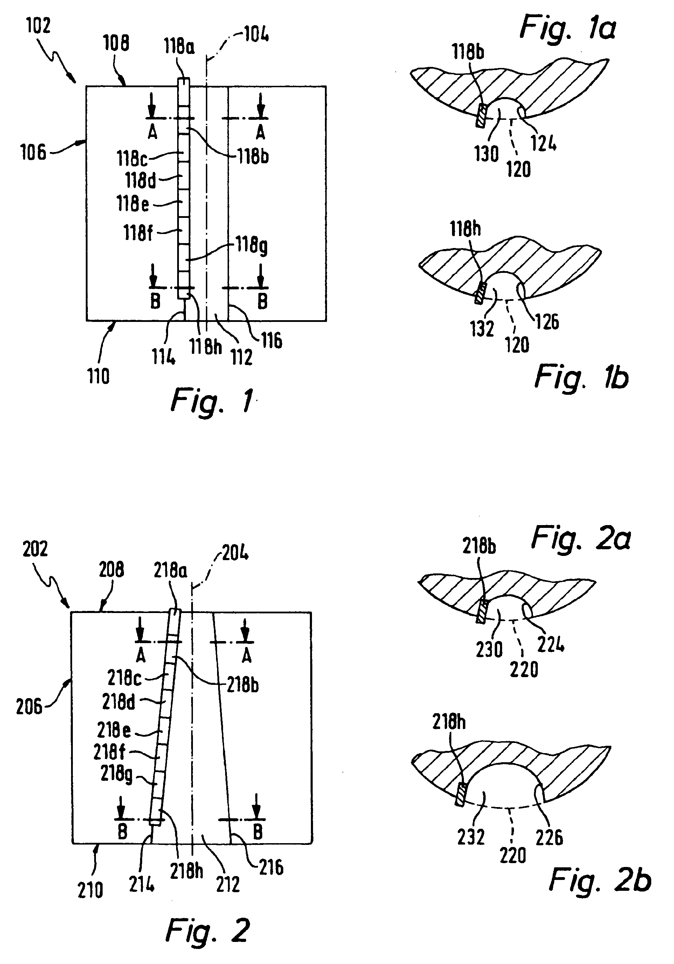

In Figur 1 ist ein Fräswerkzeug schematisch dargestellt und insgesamt mit dem Bezugszeichen 102 bezeichnet. Das Fräswerkzeug 102 kann um eine Rotationsachse 104 rotieren. Es weist eine zylindrische Umfangsseite 106 sowie eine im wesentlichen kreisförmige Stirnseite 108 und eine im wesentlichen kreisförmige Rückseite 110 auf.

An der Umfangsseite 106 ist eine Spankammer 112 vorgesehen, die gradlinig ausgebildet ist und im wesentlichen parallel zur Rotationsachse 104 verläuft. Die Spankammer 112 ist durch eine erste Berandung 114 und durch eine zweite Berandung 116 begrenzt. Die Berandungen 114 und 116 verlaufen parallel zueinander.

Benachbart zu der Stirnseite 108 zugewandten Bereich der Spankammer 112 sind insgesamt 8 entlang der Spankammer 112 angeordnete Schneidelemente 118a bis 118h vorgesehen.

Bei Rotation der Umfangsseite 106 wird eine Hüllfläche 120 gebildet, die in Figuren 1a und 1b gestrichelt angedeutet ist. Auf Höhe des in Figur 1a dargestellten Schnitts A-A ist die im Profil rinnenförmige Oberfläche der Spankammer 112 mit 124 bezeichnet. Entsprechend ist auf Höhe des Schnitt B-B die Oberfläche der Spankammer 112 gemäß Figur 1b mit 126 bezeichnet.

Der durch die Hüllfläche 120 und die Oberfläche 124 der Spankammer 112 begrenzte Querschnitt 130 ist kleiner als der durch die Hüllfläche 120 und die Oberfläche 126 der Spankammer 112 begrenzte Querschnitt 132. Somit können von den Schneidelementen 118a bis 118h erzeugte Späne effizient in Richtung Rückseite 110 des Werkzeugs 102 abtransportiert werden.

Das in Figur 2 dargestellte Werkzeug 202 weist, abweichend von dem in Figur 1 dargestellten Werkzeug 102 eine konisch ausgebildete Spankammer 212 auf. Diese wird begrenzt durch konisch aufeinander zulaufende Berandungen 214 und 216. Somit erweitert sich der Querschnitt der Spankammer 212 von der Stirnseite 208 her kommend in Richtung auf die Rückseite 210. Beispielhaft sind in Figuren 2a und 2b zwei Schnitte gemäß A-A beziehungsweise B-B (vergl. Figur 2) dargestellt. In Figur 2a ist der Schnitt durch die Spankammer 212 in Höhe A-A dargestellt. Zu erkennen ist, dass der durch die Hüllfläche 220 und die Oberfläche der Spankammer 224 begrenzte Querschnitt 230 kleiner ist als der in Figur 2b dargestellte Querschnitt 232, der durch die Hüllfläche 220 sowie durch die Oberfläche 226 der Spankammer 212 begrenzt ist. Auch mit der in Figur 2 dargestellten Ausführungsform können Späne effizient von den Schneidelementen 218a bis 218h in Richtung Rückseite 210 des Werkzeugs 202 abtransportiert werden.

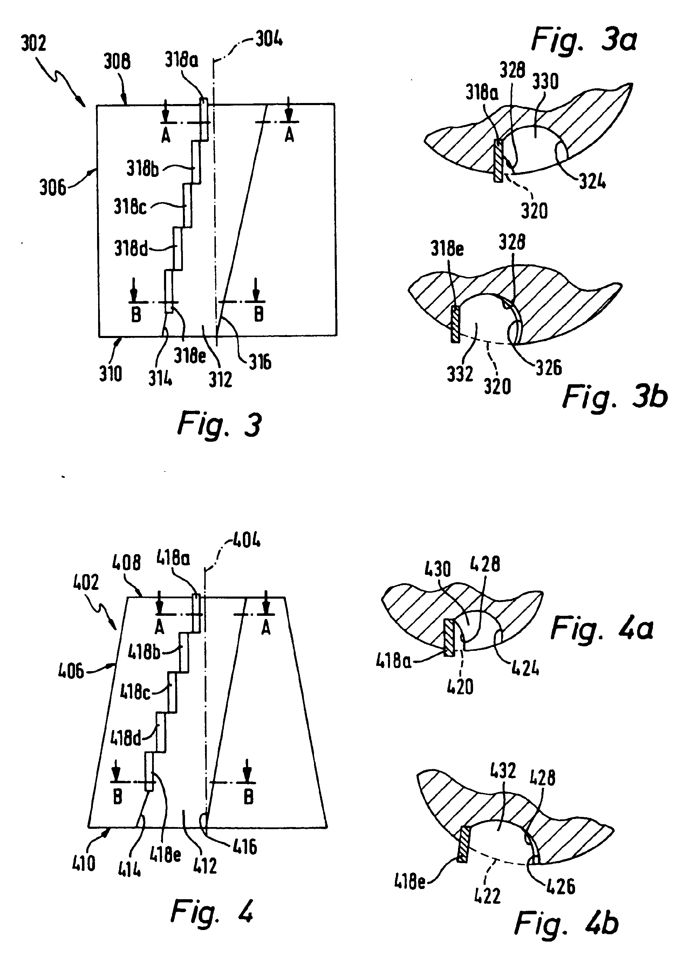

Das in Figur 3 dargestellte Werkzeug 302 weist eine gradlinige, windschief schräg zur Rotationsachse 304 verlaufende Spankammer 312 auf. Die Spankammer 312 ist begrenzt durch eine erste Berandung 314 und eine parallel dazu verlaufende Berandung 316. Entland der Berandung 314 sind insgesamt fünf Schneidelemente 318a bis 318e vorgesehen.

Wiederum in Figuren 3a und 3b sind beispielhaft zwei Schnitte in Höhe A-A und B-B gemäß Figur 3 dargestellt. In Figur 3a ist ein Querschnitt 330 der Spankammer 312 durch das Schneidelement 318a, durch die Oberfläche 324 der Spankammer 312 sowie durch die Hüllfläche 320 begrenzt. Dieser Querschnitt 330 ist kleiner als ein Querschnitt 332 in Höhe des Schnitts B-B gemäß Figur 3 beziehungsweise 3b. In Figur 3b ist zu erkennen, dass der Querschnitt 332 durch die Oberfläche 326 der Spankammer 312 sowie durch die Hüllfläche 320 begrenzt ist. In Figur 3b ist außerdem der Verlauf 328 der Oberfläche der Spankammer 312 in Höhe der Rückseite 310 des Werkzeugs 302 dargestellt.

Figur 4 zeigt ein kegelstumpfförmiges Werkzeug 402. Dessen Umfangsseite 406 hat auf Höhe einer Stirnseite 408 einen kleineren Umfang als auf Höhe einer der Stirnseite 408 gegenüberliegenden Rückseite 410.

An der Umfangsseite 406 ist eine konisch ausgebildete und windschief schräg zur Rotationsachse 404 verlaufende Spankammer 412 ausgebildet. Diese ist begrenzt durch konisch in Richtung auf die Stirnseite 408 aufeinander zulaufende Berandungen 414 und 416. Entlang der Berandung 414 sind insgesamt fünf Schneidelemente 418a bis 418e vorgesehen.

Gemäß Figur 4a ist ein Schnitt A-A gemäß Figur 4 dargestellt. Auf Höhe des Schnitts A-A weist die Hüllfläche 420 einen etwas größeren Umfang auf als der Umfang der Stirnseite 408. Durch die Hüllfläche 420 auf Höhe des Schnitts A-A und durch eine Oberfläche 424 der Spankammer 412 sowie durch das Schneidelement 418a ist ein Querschnitt 430 der Spankammer 412 begrenzt, der vergleichsweise klein ist.

In Figur 4b ist der Verlauf der Hüllfläche 422 in Höhe des Schnitts B-B gemäß Figur 4 dargestellt. Die Hüllfläche 422 begrenzt gemeinsam mit einer Oberfläche 426 der Spankammer 412 und einem Schneidelement 418e einen Querschnitt 432, der größer ist als der Querschnitt 428 gemäß Figur 4a. In den Figuren 4a und 4b ist außerdem der Verlauf der Oberfläche 428 der Spankammer 412 in Höhe der Rückseite 410 dargestellt.

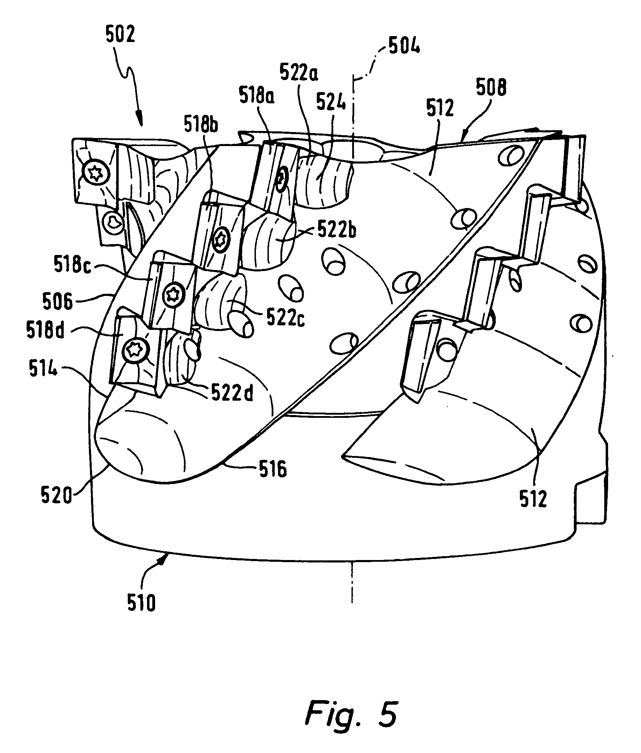

Das in Figur 5 dargestellte Werkzeug 502 weist insgesamt fünf auf der Umfangsseite 506 verteilte Spankammern 512 auf. Die Spankammern 512 sind rinnenförmig ausgebildet und erstrecken sich spiralförmig um die Rotationsachse 504 des Werkzeugs 502. Die Spankammern 512 sind jeweils begrenzt durch Berandungen 514 und 516 sowie auf der der Rückseite 510 zugewandten Seite durch einen Spankammerauslauf 520. Entlang der Berandung 514 sind insgesamt vier Schneidelemente 518a bis 518d vorgesehen. Der durch die Oberfläche der Spankammer 512 sowie durch eine nicht dargestellte, bei Rotation des Werkzeugs 502 entstehende Hüllfläche, begrenzte Querschnitt ist benachbart zum Spankammerauslauf 520 vergleichsweise klein und erweitert sich in Richtung auf die Stirnseite 508. Dabei ist der Querschnitt auf Höhe des Schneidelements 518d kleiner als der Querschnitt auf Höhe des Schneidelements 518c, dieser wiederum kleiner als auf Höhe des Schneidelements 518b und dieser schließlich kleiner als auf Höhe des Schneidelements 518a.

Benachbart zu den Schneidelementen 518a bis 518d sind jeweils innerhalb der Spankammer 512 Materialaussparungen 522a bis 522d vorgesehen. Die Materialaussparungen 522a bis 522d sind durch jeweils aneinander angrenzende Teilflächen 524 eines Zylinders gebildet. Die Teilflächen 524 bilden ihrerseits eine mehrfach gekrümmte Ebene.

Die Größe der Materialaussparungen 522a bis 522d nimmt, beginnend mit der Materialaussparung 522d, in Richtung auf die Stirnseite 508 bis zur Materialaussparung 522a zu.

## Patentansprüche

1. Werkzeug (202, 402, 502) zur rotierenden spanabhebenden Bearbeitung von Werkstoffen, mit mindestens einer länglichen Spankammer (212, 412, 512), die an der Umfangsseite (206, 406, 506) des Werkzeugs (202, 402, 502) angeordnet ist, wobei in der Spankammer (212, 412, 512) oder benachbart zu dieser eine Vielzahl von Schneidelementen (218a-h, 418a-e, 518a-d) angeordnet sind, wobei das Werkzeug (202, 402, 502) bei Rotation eine Hüllfläche (220, 420, 422) beschreibt, wobei der durch die Oberfläche der Spankammer (212, 412, 512) und die Hüllfläche (220, 420, 422) begrenzte Querschnitt (230, 232; 430, 432) entlang des Verlaufs der Spankammer (212, 412, 512) auf Höhe verschiedener Schneidelemente (218a-h, 418a-e, 518a-d) unterschiedlich groß ist, **dadurch gekennzeichnet, dass** die die Spankammern (212, 412, 512) begrenzenden Berandungen (214 und 216 bzw. 414 und 416 bzw. 514 und 516) konisch aufeinander zulaufen.

2. Werkzeug (202, 402) nach Anspruch 1, **dadurch gekennzeichnet, dass** der Querschnitt (230, 232; 430, 432) der Spankammer (212, 412) auf Höhe (B-B) eines stirnseitenfernen Schneidelements (218h, 418e) größer ist als auf Höhe (A-A) eines stirnseitennahen Schneidelements (218b, 418a).

3. Werkzeug (502) nach Anspruch 1, **dadurch gekennzeichnet, dass** der Querschnitt der Spankammer (512) auf Höhe eines stirnseitennahen Schneidelements (518a) größer ist als auf Höhe eines stirnseitenfernen Schneidelements (518d).

4. Werkzeug (202) nach mindestens einem der vorhergehenden Ansprüche, **dadurch gekennzeichnet, dass** die Hüllfläche (220) zylindrisch ist.

5. Werkzeug (402) nach mindestens einem der vorhergehenden Ansprüche, **dadurch gekennzeichnet, dass** die Hüllfläche (420, 422) durch die Mantelfläche eines Kegels oder eines Kegelstumpfs gebildet ist.

6. Werkzeug (202) nach mindestens einem der vorhergehenden Ansprüche, **dadurch gekennzeichnet, dass** der Verlauf der Spankammer (212) geradlinig ist.

7. Werkzeug (402, 502) nach mindestens einem der vorhergehenden Ansprüche, **dadurch gekennzeichnet, dass** der Verlauf der Spankammer (412, 512) spiralförmig ist.

8. Werkzeug (202) nach mindestens einem der vorhergehenden Ansprüche, **dadurch gekennzeichnet, dass** die Spankammer (212) parallel zur Rotationsachse (204) des Werkzeugs (202) verläuft.

9. Werkzeug (402, 502) nach mindestens einem der vorhergehenden Ansprüche, **dadurch gekennzeichnet, dass** die Spankammer (412, 512) schräg oder windschief schräg zur Rotationsachse (404, 504) des Werkzeugs (402, 502) verläuft.

10. Werkzeug (202, 402, 502) nach mindestens einem der vorhergehenden Ansprüche, **dadurch gekennzeichnet, dass** die Spankammer (212, 412, 512) rinnenförmig ausgebildet ist.

11. Werkzeug (202, 402) nach Anspruch 10, **dadurch gekennzeichnet, dass** der Abstand des Rinnengrunds zur Hüllfläche (220, 420, 422) variabel ist.

12. Werkzeug (502) nach mindestens einem der vorhergehenden Ansprüche, **dadurch gekennzeichnet, dass** in der Spankammer (512), jeweils einem Schneidelement (518a-d) oder einer Gruppe von Schneidelementen zugeordnet, zusätzliche Materialaussparungen (522a-d) vorgesehen sind.

13. Werkzeug (502) nach Anspruch 12, **dadurch gekennzeichnet, dass** die Materialaussparungen (522a-d) durch Teilflächen eines Zylinders, Kegels und/oder Kegelstumpfs begrenzt sind.

14. Werkzeug (202, 402, 502) nach mindestens einem der vorhergehenden Ansprüche, **dadurch gekennzeichnet, dass** 2, 4 oder 6 Spankammern (212, 412, 512) vorgesehen sind.

## Claims

1. A tool (202, 402, 502) for the rotating, chip-cutting processing of materials, having at least one oblong chip chamber (212, 412, 512) arranged on the circumferential surface (206, 406, 506) of the tool (202, 402, 502), wherein a plurality of cutting elements (218a-h, 418a-e, 518a-d) is arranged in the chip chamber (212, 412, 512) or adjacent to it, wherein in the course of its rotation the tool (202, 402, 502) defines an enveloping surface (220, 420, 520), wherein the cross section (230, 232, 430, 432) delimited by the surface of the chip chamber (212, 412, 512) and the enveloping surface (220, 420, 520) along the course of the chip chamber (212, 412, 512) is of different size along different cutting elements (218a-h, 418a-e, 518a-d), **characterized in that** the borders (214 and 216, or respectively 414 and 416, or respectively 514 and 516), which delimit the chip chambers (212, 412, 512), extend conically toward each other.

2. The tool (202, 402) in accordance with claim 1, **characterized in that** the cross section (230, 232, 430, 432) of the chip chamber (212, 412) at the level (B-B) of a cutting element (218h, 418e) remote from the front is larger than at the level (A-A) of a cutting element (218b, 418a)) near the front.

3. The tool (502) in accordance with claim 1, **characterized in that** the cross section of the chip chamber (512) at the level of a cutting element (518a) near the front is larger than at the level of a cutting element (518d) remote from the front.

4. The tool (202) in accordance with at least one of the preceding claims, **characterized in that** the enveloping surface (220) is cylindrical.

5. The tool (402) in accordance with at least one of the preceding claims, **characterized in that** the enveloping surface (420, 422)) is constituted by the generated surface of a cone or a truncated cone.

6. The tool (202) in accordance with at least one of the preceding claims, **characterized in that** the course of the chip chamber (212) is straight.

7. The tool (402, 502) in accordance with at least one of the preceding claims, **characterized in that** the course of the chip chamber (412, 512) is helical.

8. The tool (202) in accordance with at least one of the preceding claims, **characterized in that** the chip chamber (212) extends parallel in respect to the axis of rotation (204) of the tool (202).

9. The tool (402, 502) in accordance with at least one of the preceding claims, **characterized in that** the chip chamber (412, 512) extends obliquely, or is skewed obliquely, in respect to the axis of rotation (404, 504) of the tool (402, 502).

10. The tool (202, 402, 502) in accordance with at least one of the preceding claims, **characterized in that** the chip chamber (212, 412, 512) is designed in the shape of a groove.

11. The tool (202, 402) in accordance with claim 10, **characterized in that** the distance between the groove bottom and the enveloping surface (220, 420, 422) is variable.

12. The tool (502) in accordance with at least one of the preceding claims, **characterized in that** additional cutouts (522a- d) in the material are provided and are assigned to a respective cutting element (518a-d), or a group of cutting elements.

13. The tool (502) in accordance with claim 12, **characterized in that** the cutouts (522a-d) in the material are bordered by partial surfaces of a cylinder, cone or truncated cone.

14. The tool (202, 402, 502) in accordance with at least one of the preceding claims, **characterized in that** two, four or six chip chambers (212, 412, 512) are provided.

## Revendications

1. Outil (202, 402, 502) pour l'usinage rotatif de matériaux par enlèvement de copeaux, comportant au moins une chambre de copeaux (212, 412, 512) allongée, qui est disposée sur le côté périphérique (206, 406, 506) de l'outil (202, 402, 502), une pluralité d'éléments de coupe (218a-h, 418a-h, 518ah) étant disposés dans la chambre de copeaux (212, 412, 512) ou à proximité de celle-ci, sachant que l'outil (202, 402, 502) pendant sa rotation décrit une enveloppante (220, 420, 422), la section (230, 232 ; 430, 432) délimitée par la surface de la chambre de copeaux (212, 412, 512) et de l'enveloppante (220, 420, 422) ayant une dimension différente le long du tracé de la chambre de copeaux (212, 412, 512) à la hauteur des différents éléments de coupe (218a-h, 418a-h, 518a-h), **caractérisé en ce que** les bords (214 et 216 ou 414 et 416 ou 514 et 516) délimitant les chambres de copeaux (212, 412, 512) convergent en forme de cône l'un vers l'autre.

2. Outil (202, 402) selon la revendication 1,
**caractérisé en ce que** la section (230, 232 ; 430, 432) de la chambre de copeaux (212, 412) à la hauteur (B-B) d'un élément de coupe (218h, 418e) éloigné de la face frontale est plus grande qu'à la hauteur (A-A) d'un élément de coupe (218b, 418a) proche de la face frontale.

3. Outil (502) selon la revendication 1, **caractérisé en ce que** la section de la chambre de copeaux (512) à la hauteur d'un élément de coupe (518a) proche de la face frontale est plus grande qu'à la hauteur d'un élément de coupe (518d) éloigné de la face frontale.

4. Outil (202) selon au moins l'une quelconque des revendications précédentes, **caractérisé en ce que** l'enveloppante (220) est cylindrique.

5. Outil (402) selon au moins l'une quelconque des revendications précédentes, **caractérisé en ce que** l'enveloppante (420, 422) est formée par la surface latérale d'un cône ou d'un cône tronqué.

6. Outil (202) selon au moins l'une quelconque des revendications précédentes, **caractérisé en ce que** le tracé de la chambre de copeaux (212) est droit.

7. Outil (402, 502) selon au moins l'une quelconque des revendications précédentes, **caractérisé en ce que** la chambre de copeaux (412, 512) a un tracé en forme de spirale.

8. Outil (202) selon au moins l'une quelconque des revendications précédentes, **caractérisé en ce que** la chambre de copeaux (212) est orientée parallèlement à l'axe de rotation (204) de l'outil (202).

9. Outil (402, 502) selon au moins l'une quelconque des revendications précédentes, **caractérisé en ce que** la chambre de copeaux (412, 512) est orientée en biais ou est inclinée par rapport à l'axe de rotation (404, 504) de l'outil (402, 502).

10. Outil (202, 402, 502) selon au moins l'une quelconque des revendications précédentes, **caractérisé en ce que** la chambre de copeaux (212, 412, 512) est réalisée en forme de rainure.

11. Outil (202, 402) selon la revendication 10,
**caractérisé en ce que** la distance entre le fond de la rainure et l'enveloppante (220, 420, 422) est variable.

12. Outil (502) selon au moins l'une quelconque des revendications précédentes, **caractérisé en ce que** des évidements de matière (522a-d) supplémentaires, associés chacun à respectivement un élément de coupe (518a-d) ou à un groupe d'éléments de coupe, sont prévus dans la chambre de copeaux (512).

13. Outil (502) selon la revendication 12, **caractérisé en ce que** les évidements de matière (522a-d) sont délimités par des surfaces partielles d'un cylindre, d'un cône et/ou d'un cône tronqué.

14. Outil (202, 402, 502) selon au moins l'une quelconque des revendications précédentes, **caractérisé en ce qu'**il est prévu deux, quatre ou six chambres de copeaux (212, 412, 512).
